(19) Europäisches Patentamt
European Patent Office
Office européen des brevets

(11) Publication number: **0 295 039 A2**

(12) **EUROPEAN PATENT APPLICATION**

(21) Application number: **88305160.9**

(51) Int. Cl.[4]: **G02B 6/28 , C03B 37/14**

(22) Date of filing: **07.06.88**

(30) Priority: **10.06.87 JP 144909/87**

(43) Date of publication of application:
**14.12.88 Bulletin 88/50**

(84) Designated Contracting States:
**DE FR GB**

(71) Applicant: **SEIKO INSTRUMENTS INC.**
**31-1, Kameido 6-chome Koto-ku**
**Tokyo 136(JP)**

(72) Inventor: **Takesue, Toshiharu**
**c/o Seiko Instruments Inc. 31-1, Kameido, 6-chome**
**Koto-ku Tokyo(JP)**
Inventor: **Yamamoto, Hiroyoshi**
**c/o Seiko Instruments Inc. 31-1, Kameido 6-chome**
**Koto-ku Tokyo(JP)**

(74) Representative: **Miller, Joseph et al**
**J. MILLER & CO. Lincoln House 296-302 High Holborn**
**London WC1V 7JH(GB)**

(54) **Optical waveguide coupler.**

(57) An optical waveguide coupler comprises two optical waveguides in the form of optical fibres (1,2) closely spaced apart to allow light propagating in one optical waveguide to couple into the other. The fibres 1 and 2 have cores (3,4) made of materials having different refractive indices, respectively. This stabilizes the splitting ratio against a large change due to a slight change in coupling length, whereby the control of the coupling ratio during manufacture becomes easy, and deviations in splitting ratio can be greatly reduced.

Fig. 1

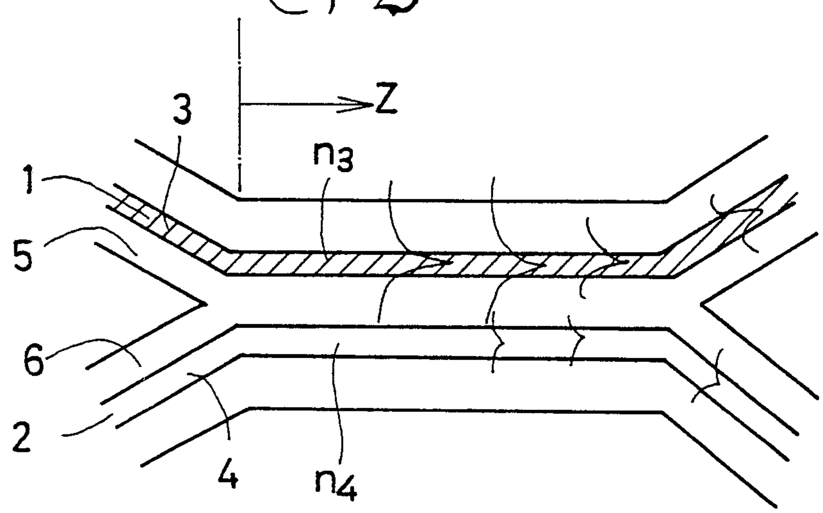


EP 0 295 039 A2

Xerox Copy Centre

## "OPTICAL WAVEGUIDE COUPLER"

The present invention relates to optical waveguide couplers using optical fibres, planar waveguides, and the like, which are used in optical fibre communications and optical measurements.

Various processes for the fabrication of waveguide couplers are known. For example, U.S. Patent No. 3,579,316, and International Publication No. W087/00934 disclose such fabrication processes, and optical waveguide couplers in which the same material is used for the cores of optical fibres, or for waveguide portions, in the case of planar waveguides. A drawback of such an optical waveguide coupler is that the splitting ratio is greatly dependent upon the coupling length.

Recently there have been growing demands in measurement and optical communication to monitor signal conditions in main communication lines without disturbing the information in the main lines. The use of optical waveguide couplers is easy and inexpensive to accomplish this object. For such monitoring purpose, the required splitting ratio R is selected to be 20 to 40 dB. If the same material is used for the cores or waveguide portions a slight difference in coupling length causes a large change in the splitting ratio R as explained below. Therefore, the control of coupling length to obtain a desired splitting ratio during manufacture is very difficult, which consequently results in many splitting ratio deviations. In addition, there is another problem in which a slight change in external condition such as temperature causes a slight change in coupling length thereby resulting in a large change in the splitting ratio.

An object of the invention is therefore to solve the abovementioned problems. Thus, according to the invention, an optical waveguide coupler comprising at least two optical fibres having cores, is characterised in that the cores of the optical fibres comprise materials having different refractive indices respectively.

An optical waveguide coupler according to the present invention may also comprise a planar waveguide having at least two waveguide portions therein, and characterised in that the waveguide portions are composed of materials having different refractive indices respectively. Thus, the maximum splitting ration of the closely placed waveguides is lowered whereby the splitting ratio change around the peaks of the splitting ratio curve due to changes in coupling length can be reduced. Therefore, the present invention improves the yield in the fabrication of optical waveguide couplers with a given splitting ratio, and reduces splitting ratio deviations of optical waveguide couplers.

How the invention may be carried into effect is hereinafter particularly described with reference to the accompanying drawings, in which:

Figure 1 shows in diagrammatic form the principal structure of an optical coupler to which the present invention is applicable;

Figure 2 shows the relationship between coupling length and splitting ration when the same material is used for cores of closely placed waveguides as in the prior art;

Figure 3 shows the relationship between coupling length and splitting ratio according to the present invention; and

Figure 4 shows the relationship between coupling length and splitting ratio of one embodiment of the invention.

In Figure 1 there is shown an optical coupler to which the present invention is applicable using two single-mode optical fibres 1 and 2. The coupling region is formed by either fusing or etching and splicing with adhesive, parts of the two single-mode optical fibres.

In the case of closely placed waveguides made of the same material, the splitting ratio R is given as $R = 10 \log \mathrm{Tan}^2 XZ$, where X is the coupling coefficient and Z is the coupling length.

As shown in Figure 2, the splitting ratio is governed by a periodic function of the coupling length Z in which complete power transfer from the core 3 to the core 4 takes place at distances of integral multiples of $\frac{\pi}{2X}$.

As will be seen from Figure 2, a slight change in coupling length produces a large change in splitting ratio.

It has now been found that with core or waveguide portions of different materials, the splitting ratio R is given by a logarithm of the ratio of light intensities in cores 3 and 4, $\frac{P_b}{P_a}$, as follows:

$$R = 10 \log \frac{Pb}{Pa}$$

$$= 10 \log \frac{X^2 \sin^2 \beta c Z}{\Delta^2 + (X \cos \beta c Z)^2}$$

where X is the coupling coefficient,
$\Delta$ is half the propagation constant difference, Z is the coupling length from the start of coupling and

$$\beta c = \sqrt{X^2 + \Delta^2}.$$

In one embodiment of the invention, the cores 3 and 4 of the two optical fibres 1 and 2 are made of materials having different refractive indices $n_3$ and $n_4$. When light which enters into an incident port 5 propagates, the splitting ratio at a coupling length Z is given by

$$R = 10 \log \frac{X^2 \sin^2 \beta c Z}{\Delta^2 + (X \cos \beta c Z)^2}$$

where $\frac{\pi}{\lambda}$ ($n_3$- $n_4$) and $\lambda$ is the wavelength in the light in vacuum. The result is shown in Figure 3. Therefore, when conditions are selected to give the maximum value of the above equation, namely when the coupling length is selected to be an odd multiple of $\frac{\pi}{2\beta c}$, a splitting ratio of 10 log

$$\left(\frac{X^2}{\Delta^2}\right)$$

is obtained. When refractive indices $n_3$ and $n_4$ of cores or guide portions of closely placed waveguides are selected so that the result becomes the desired splitting ratio, the splitting ratio does not drastically change against a slight change of the coupling length.

For example, when single-mode fibres of 10µm in core diameter are used and the coupling length is selected to be between 20 and 30 mm, its coupling coefficient is about 6 x $10^{-5}$ 1/µm. Assuming the wavelength of the propagating light to be 0.78 µm and the splitting ratio R to be -20 dB, $\frac{\pi}{\lambda}$ ($n_3$-$n_4$) = 6 x $10^{-4}$ 1/µm is obtained. For example, when BACD2 glass, made by HOYA of Japan is used for one of the glass waveguides and BACD7 glass for the other, the refractive index difference $\Delta$ is 1.8 x $10^{-4}$. Because this value gives almost the same result of the above equation, the splitting ratio of -20dB is obtained at odd multiples of $\frac{\pi}{2\beta c}$ ≒ 2.6 mm (Figure 3). In this case, a line branched off from the main transmission line is used for monitoring.

In another embodiment, if the wavelength of the propogating light is selected to be 0.59µm and the splitting ratio to be 20 dB, $\frac{\pi}{\lambda}$ ($n_3$-$n_4$) becomes 6 x $10^{-6}$ 1/µm. If BACD16 glass is used for one of the glass waveguides and BACD165 glass for the other, the refractive index difference $\Delta$ between the two glass materials almost satisfies the above equation. The splitting ratio becomes about 20dB at point A and point B in Figure 3 at odd multiples of $\frac{\pi}{2\beta c}$ = 2.6mm. In this case also a slight change in the coupling length does not cause a drastic change in the splitting ratio. In this embodiment, the main transmission line is used for monitoring and the branch line is used for main transmission.

It is obvious that, besides the glasses referred to as examples, other material combinations can be selected to provide the same characteristics.

Although single-mode optical fibres are used as examples, the same characteristics can be obtained with multi-mode optical fibres, planar waveguides and the like. The same result can be obtained with

combinations of glass materials having large differences in refractive index between the two cores, by increasing the coupling coefficient thereof, for example by the use of optical fibres having smaller cladding diameters.

By use of the present invention, the splitting ratio becomes very stable against a slight change in the coupling length; control of the coupling length during manufacture is therefore easy and it lowers the cost; splitting ratio deviations are thus reduced to a minimum and the splitting ratio is very stable against external condition changes particularly temperature change. Consequently optical couplers of uniform quality can be produced.

## Claims

1. An optical waveguide coupler comprising at least two optical fibres (1,2) fused together or etched and spliced together for allowing light propagating in one fibre to couple into one or more other fibres, the optical fibres (1,2) having cores (3,4), characterised in that the cores (3,4) of the optical fibres (1,2) comprise materials having different refractive indices ($n_3$, $n_4$) respectively.

2. An optical waveguide coupler comprising a planar waveguide having at least two optical waveguide portions therein, characterised in that the waveguide portions are composed of materials having different refactive indices, respectively.

3. An optical coupler as claimed in claim 1, in which the optical fibres comprise single-mode optical fibres.

4. An optical coupler as claimed in claim 1, in which the optical fibres comprise multi-mode optical fibres.

5. An optical coupler according to any preceding claim characterised in that the refractive indices ($n_3$, $n_4$) are so chosen that half the propogation constant difference ($\Delta$) which is dependent upon the difference ($n_3$, $n_4$) in refractive index and the wavelength ($\lambda$) of propogating light ($\Delta = \frac{\pi}{\lambda}$ $(n_3-n_4)$) is such that the splitting ratio (R) is a maximum at coupling lengths of odd multiples of $\frac{\pi}{2\beta_c}$, where

$$\beta c = \sqrt{X^2 + \Delta^2},$$

and X is the coupling coefficient.

Fig. 1

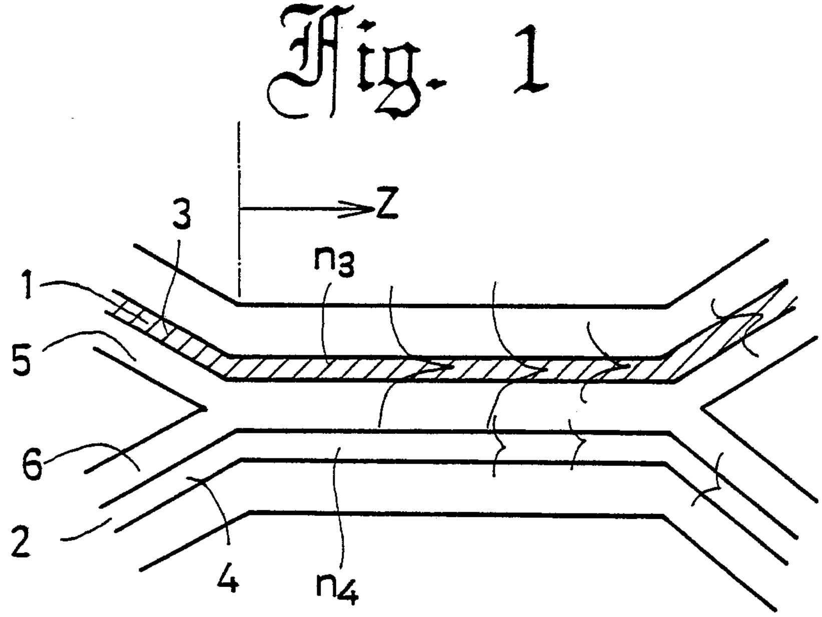
Z
3
1
5
6
2
4
$n_3$
$n_4$

Fig. 2

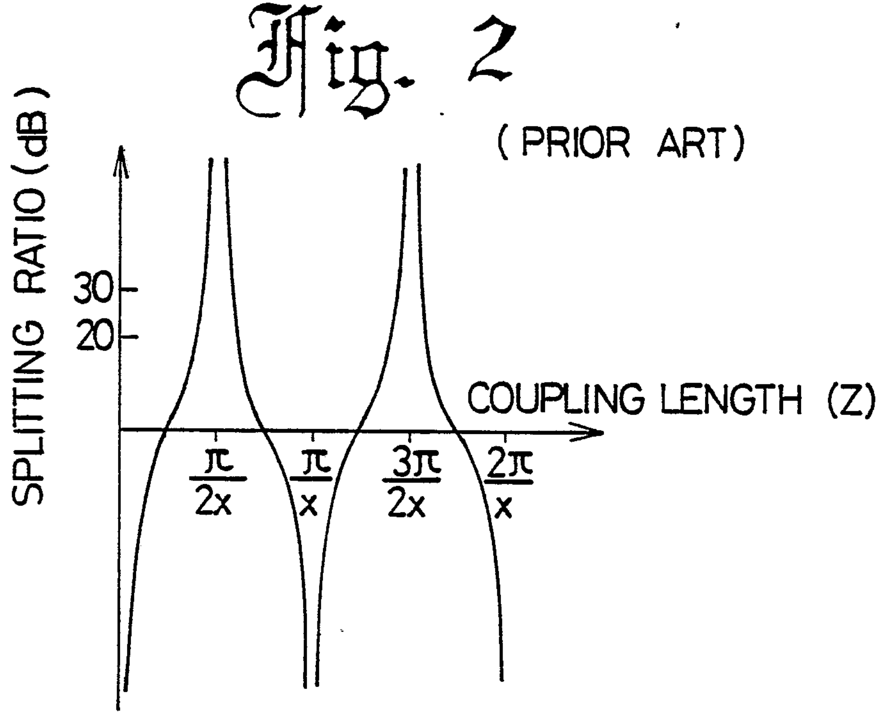
(PRIOR ART)
SPLITTING RATIO (dB)
30
20
COUPLING LENGTH (Z)
π/2x
π/x
3π/2x
2π/x

Fig. 3

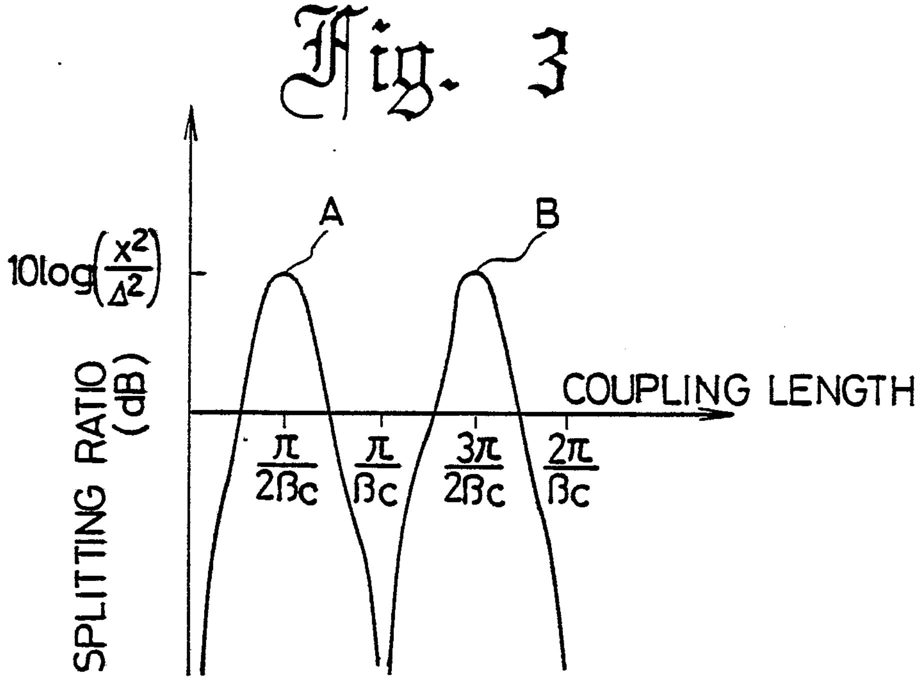
A
B
10log(X²/Δ²)
SPLITTING RATIO (dB)
COUPLING LENGTH
π/2βc
π/βc
3π/2βc
2π/βc

Fig. 4

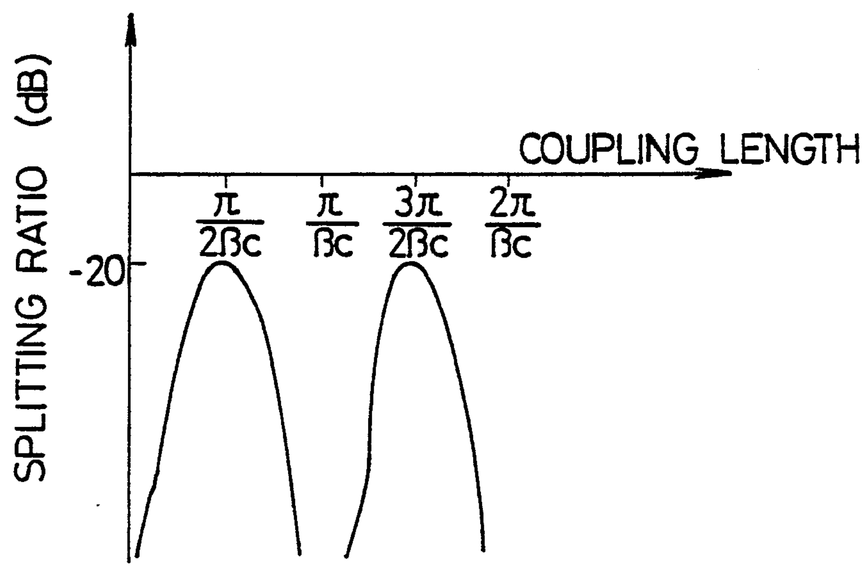
SPLITTING RATIO (dB)
COUPLING LENGTH
π/2βc
π/βc
3π/2βc
2π/βc
-20